# EUROPÄISCHE PATENTSCHRIFT

(11) **EP 2 200 842 B1**
(45) Veröffentlichungstag und Bekanntmachung des Hinweises auf die Patenterteilung: **21.05.2014**
(21) Anmeldenummer: 08839836.7
(22) Anmeldetag: 15.10.2008
(51) Int. Cl.: B42D 25/00, G03H 1/00, G03H 1/02, G03H 1/26, G03H 1/20

(54) **SICHERHEITS- UND/ODER WERTDOKUMENT MIT IN VERSCHIEDENEN SCHICHTEN EINGERICHTETEN HOLOGRAMMEN**
SECURITY AND/OR VALUABLE DOCUMENT COMPRISING HOLOGRAMS ESTABLISHED IN DIFFERENT LAYERS
DOCUMENT DE SÉCURITÉ ET/OU DE VALEUR COMPRENANT DES HOLOGRAMMES FORMÉS DANS DIFFÉRENTES COUCHES

(30) Priorität: 18.10.2007 DE 102007050277
(43) Veröffentlichungstag der Anmeldung: 30.06.2010
(73) Patentinhaber: Bundesdruckerei GmbH, 10958 Berlin (DE)
(72) Erfinder: LEOPOLD, André, 10119 Berlin (DE); EHREKE, Jens, D-12887 Berlin (DE); MUTH, Oliver, 12277 Berlin (DE)
(74) Vertreter: Jungblut, Bernhard Jakob
(86) Internationale Anmeldenummer: PCT/DE2008/001673
(87) Internationale Veröffentlichungsnummer: WO 2009/049600

(56) Entgegenhaltungen:
- EP-A2- 0 420 261
- WO-A-00/73089
- WO-A-2006/074558
- GB-A- 1 527 442
- JP-A- 11 133 232
- US-A1- 2002 174 790

## Beschreibung

### Gebiet der Erfindung

Die Erfindung betrifft ein Verfahren zur Herstellung eines Sicherheits- und/oder Wertdokuments mit zumindest zwei miteinander verbundenen Schichten, wobei zumindest eine der Schichten ein diffraktives Sicherheitselement trägt.

### Stand der Technik und Hintergrund der Erfindung

Aus der Praxis ist es bekannt, Sicherheits- und/oder Wertdokumente aus mehreren Schichten herzustellen, wobei die verschiedenen Schichten typischerweise Filme oder Folien aus einem organischen Polymerwerkstoff sind, und wobei eine der Schichten ein diffraktives Sicherheitselement, beispielsweise ein Hologramm trägt. Die insofern bekannten Sicherheits- und/oder Wertdokumente sind in Hinblick auf die Dokumentensicherheit und die Dokumentenintegration verbesserungsfähig. Dies gilt in besonderem Maße für Varianten, in denen das diffraktive Sicherheitselement die oberste Schicht des Sicherheits-und/oder wertdokuments, beispielsweise als Aufkleber (sogenanntes Patch), bildet. Als Patches sind beispielsweise sogenannte Identigramme aus der Praxis bekannt, wobei in dem Patch sowohl statische Informationen (beispielsweise Wappen) als auch personalisierte Informationen (beispielsweise Personendaten) holographisch gespeichert sind.

Insbesondere wäre es wünschenswert, einen unerlaubten Eingriff in das diffraktive Sicherheitselement weiter zu erschweren.

Sogenannte Volumenhologramme und deren Herstellung sind beispielsweise aus der Literaturstelle EP 0896260 A2 bekannt. Hierbei wird eine Schicht aus einem holographischen Material unter holographischen Bedingungen belichtet. Volumenhologramme erreichen eine hohe Beugungseffizienz und können zudem als Reflexionshologramme ausgebildet sein, bei welchen die Braggebenen im wesentlichen parallel zur Oberfläche stehen. Dies macht sie relativ fälschungssicher im Vergleich zu geprägten Hologrammen
Im Bereich der Sicherheits- und/oder Wertdokumente werden solche Volumenhologramme als (ggf. transparenter) Film ausgebildet und auf eine ggf. bedruckte Kernschicht aufgebracht. Ebenso ist eine Einlaminieren des holographischen Films zwischen andere Schichten des Sicherheits- und/oder Wertdokuments möglich.

Das Dokument WO 2006/074558 A beschreibt ein Sicherheits-und/oder Wertdokument mit zunächst zwei gestapelten Substratschichten, wobei die Substratschichten jeweils ein diffraktives Sicherheitselement tragen. Das Dokument EP 0420261,A2 beschreibt ein personalisiertes diffraktives Sicherheitselement zum Aufkleben.

### Technisches Problem der Erfindung

Der Erfindung liegt daher das technische Problem zu Grunde, ein Verfahren zur Herstellung eines Sicherheits-und/oder Wertdokumente des eingangs genannten Aufbaus anzugeben, welches eine verbesserte Dokumentensicherheit aufweist, und ein Verfahren zu dessen Herstellung anzugeben.

### Grundzüge der Erfindung und bevorzugte Ausführungsformen

Zur Lösung dieses technischen Problems lehrt die Erfindung die Gegenstände der Ansprüche 1 und 2. Damit herstellbar ist ein Sicherheits- und/oder Wertdolcument mit zumindest zwei miteinander gestapelt verbundenen Substratschichten, wobei die Sustratschichten jeweils ein diffraktives Sicherheitselement tragen.

Gegenüber der Aufbringung eines Patches aus dem Stand der Technik ist dadurch gleichsam eine Aufteilung der holographischen Informationen des Patches auf verschiedene Substratschichten des fertigen Dokumentes eingerichtet, wobei zumindest eines der diffraktiven Elemente zwischen zwei Substratschichten angeordnet ist.

Mit der Erfindung wird also erreicht, dass zumindest eines der diffraktiven Sicherheitselemente im Volumen des Sicherheits- und/oder Wertdokumentes gleichsam implantiert ist und ein Zugriff ein zerstörungsfreies Delaminieren des Verbundes in mehrere Substratschichten erfordert, was mit erheblichen Schwierigkeiten verbunden wäre. Zudem kann unschwer die gesamte Sichtfläche des sicherheits- und/oder Wertdokumentes diffraktive Sicherheitselemente aufweisen, wobei bei der Produktion der verschiedenen Substratschichten die diffraktiven Sicherheitselemente nur Teilflächen einzunehmen brauchen, während die anderen Teilflächen für andere Merkmale, wie Bedruckungen, Bilder, wie Passbilder, etc., zur Verfügung stehen. Hierfür kommen beispielsweise in Frage Pigmentbeschichtungen, welche eine Lasergravur erlauben, wie Iriodin-LS der Firma Merck. Es sind aber auch Bedruckungen herkommlicher Art, wie beispielsweise Guillochen, Irisdruck, Druck von optisch variablen oder aktiven Farben, wie Lumineszenzfarben, beispielsweise UV-fluoreszierende oder phosphoreszierende Farben, möglich. Aber auch Anti-Stokes-Farben bzw. Farben, welche Photochromie oder Thermochromie zeigen, sind einsetzbar. Mit solchen Farben können beispielsweise vor dem Aufdrucken des Musters fluoreszierende Strukturen in solchen Teilbereichen einer ersten Substratschicht gedruckt werden, welche bei miteinander verbundenen Substratschichten unterhalb von Teilbereichen einer zweiten Substratschicht liegen, welche ein diffraktives Sicherheitselement tragen. Dadurch werden unter beispielsweise UV-Bestrahlung fluoreszierende diffraktive Sicherheitselemente erzeugt.

Bei den diffraktiven Sicherheitselementen kann es sich um solche handeln, welche eine personalisierende Information (personenbezogen, beispielsweise Lichtbild oder sonstige biometrische Daten, wie Fingerabdruck, Irismuster), eine individualisierende Information (auf ein einzelnes Dokument bezogen, jedoch bis zur Fertigstellung des Dokumentes noch nicht personenbezogen, beispielsweise eine für ein Dokument individuelle Dokumentennummer bzw. Seriennummer) oder eine statische Information (für alle Dokumente eines Dokumententyps gleiche Information, beispielsweise ein Hoheitszeichen, Wappen oder Siegel), personen- und oder maschinenlesbar, darstellen bzw. optisch erfassbar gespeichert enthalten. Bevorzugt ist es, wenn das diffraktive Sicherheitselement einer ersten (im fertigen Dokument unter der zweiten Substratschicht liegenden) Substratschicht statische Informationen enthält, während das diffraktive Sicherheitselement der zweiten Substratschicht individualisierende und/oder personalisierende Informationen enthält. Dann wird es produktionstechnisch vorteilhaft sein, wenn die oberste Substratschicht ein individualisiertes und/oder personalisiertes diffraktives Sicherheitselement trägt. Denn man kann dann zunächst einen Rohling eines Sicherheits- und/oder Wertdokuments herstellen, welcher bereits alle statischen Informationen trägt, und erst im Rahmen des anschließenden Individualierungs-/Personalisierungsprozesses, in welchem beispielsweise im Wege der Lasergravur Daten auf das Dokument geschrieben werden, auch die oberste Substratschicht mit dem individualisierten/personalisierten diffraktiven Sicherheitselement aufbringen.

Es ist alternativ aber auch möglich, zunächst eine Serie eines Dokumentes bzw. von Dokumentenrohlingen herzustellen, wobei die statische Information und/oder die individualisierende Information in dem diffraktiven Sicherheitselement einer ersten (und im fertigen Dokument innenliegenden) Substratschicht oder in verschiedenen diffraktiven Sicherheitselementen mehrerer verschiedenen solcher (später innenliegenden) Substratschichten gespeichert ist, und wobei die oberste Substratschicht dann mit personalisierten Informationen aufgebracht wird. Dies erlaubt beispielsweise die Herstellung eines "Batch" von Personaldokumenten bzw. Rohlingen, die eine fortlaufende Numerierung bereits tragen, jedoch erst später jeweils personalisiert werden.

Vorteilhafterweise wird also erreicht, dass sich holographisches Material beispielsweise mit statischen und/oder individuellen Informationen in tiefere Schichten des fertigen Dokumentes bzw. zwischen zwei Substratschichten liegend einbringen lassen, während die Personalisierung im Rahmen der obersten Substratschicht erfolgt.

Hinzu kommt, dass sich diffraktive Sicherheitselemente sogar im Schichtaufbau eines Dokumentes in ein nicht-diffraktives Sicherheitselement einbauen lassen, i.e. das diffraktive Sicherheitselement befindet sich, in Richtungen orthogonal zu einer Hauptebene der Substratschichten, unmittelbar bei oder sogar innerhalb eines nicht-diffraktiven Sicherheitselements bzw. zwischen in verschiedenen Substratschichten angeordneten Teilen eines nicht-diffraktiven Sicherheitselements. Lediglich beispielsweise sei eine Substratschicht mit einem diffraktiven Sicherheitselement genannt, welche zwischen zwei anderen Substratschichten angeordnet ist, die im lateralen Bereich des diffraktiven Sicherheitselements nicht-diffraktive Sicherheitselemente oder -Teilelemente tragen, beispielsweise Lasergravurschichten aufweisen. Es läßt sich folglich ein räumlicher Abstand, bezogen auf Richtungen orthogonal zu einer Hauptfläche der Substratschichten, zwischen diffraktiven Sicherheitelementen und nicht-diffraktiven Sicherheitselementen minimieren gegenüber dem Stand der Technik, wo eine Schicht mit einem diffraktiven Sicherheitselement einfach auf Bereich mit nicht-diffraktiven Sicherheitselementen aufgebracht wird.

Die Anzahl der Substratschichten mit einem oder mehreren diffraktiven Sicherheitselementen beträgt erfindungsgemäß beispielsweise 2. Es können auch 3 bis 10 Substratschichten jeweils mit einem oder mehreren diffraktiven Sicherheitselementen ausgestattet sein.

Der Begriff des Substrates bezeichnet hierbei jede beliebige Trägerschicht oder Folie, wobei es sich nicht notwendigerweise um eine Kernschicht eines Sicherheits-und/oder Wertdokuments handeln muss.

Der Begriff des holographischen Materials bezeichnet typischerweise organische Photopolymere, welche sich holographisch belichten lassen und Informationen holographisch speichern. Solche speziellen für die Holographie, insbesondere für Volumenhologramme, geeignete organische Photopolymere sind dem Fachmann gut vertraut und daher wird auf die diesbezügliche Fachliteratur verwiesen.

Im Einzelnen bestehen im Rahmen der Erfindung verschiedene Möglichkeiten der weiteren Ausbildung.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Erfindungsgemäße Sicherheits- und/oder Wertdokumente weisen zumindest zwei Substratschichten auf, ggf. eine Druckschicht und optional eine transparente Deckschicht auf. Eine Substratschicht ist eine Trägerstruktur, auf welche das diffraktive Sicherheitselement und ggf. daneben eine Druckschicht mit Informationen, Bildern, Mustern und dergleichen aufgebracht wird. Als Materialien für eine Substratschicht kommen alle fachüblichen transparenten Werkstoffe auf Kunststoffbasis in Frage. Insbesondere handelt es sich laminierfähige Werkstoffe. Unterhalb der Substratschichten kann, muss aber nicht zwingend eine ggf. auch nicht-transparente Kernschicht angeordnet sein, wobei auf der gegenüber liegenden Seite der Kernschicht weitere Schichten, beispielsweise spiegelsymmetrisch zur Mittelebene der Kernschicht, angeordnet sein können. Die Kernschicht kann ihrerseits aus einer Mehrzahl von gestapelten und miteinander verbundenen Kernteilschichten gebildet sein. Typische Kernteilschichten umfassen beispielsweise eine Inlayschicht, ggf. mit einem Chip und eine hierauf angeordnete, die Inlayschicht abdeckende opake Schicht.

Bevorzugt ist es, wenn die diffraktiven Sicherheitselemente Hologramme, insbesondere Volumenhologramme, sind.

Die Schichtfolge eines erfindungsgemäß hergestellten Sicherheits- und/oder Wertdokuments ist grundsätzlich beliebig. So können die Substratschichten unmittelbar gestapelt miteinander verbunden sind. Es ist aber auch möglich, dass die Substratschichten unter Zwischenlage von zumindest einer Zwischenschicht gestapelt miteinander verbunden sind. Bei mehr als zwei Substratschichten kann auch teilweise mit.direkter Verbindung und teilweise mit Zwischenschichten gearbeitet werden. Die oberste Substratschicht kann mit einer (transparenten) Deckschicht abgedeckt sein.

Bezogen auf den fertigen Verbund der verschiedenen Substratschichten eines Sicherheits- und/oder Wertdokuments können die diffraktiven Sicherheitselemente der verschiedenen Substratschichten grundsätzlich beliebig zueinander angeordnet sein. So ist es möglich, dass die diffraktiven Sicherheitselemente verschiedener Substratschichten, in Projektion orthogonal zu einer Hauptfläche des Sicherheits- und/oder Wertdokumentes, einander zumindest teilweise überlappen. Auch ist es möglich, dass die diffraktiven Sicherheitselemente verschiedener Substratschichten aneinander anschließen, vorzugsweise registergenau aneinander anschließen. Schließlich ist es möglich, dass die diffraktiven Sicherheitselemente verschiedener Substratschichten voneinander beabstandet angeordnet sind. In der Regel wird man ein diffraktives Sicherheitselement einer oberen Substratschicht so anordnen, dass es, in Projektion orthogonal zu einer Hauptfläche des Sicherheits- und/oder Wertdokuments, zumindest teilweise, vorzugsweise vollflächig, über einem sicherheitstechnisch zu schützenden anderen Merkmal, beispielsweise einem Passbild oder einem Adressfeld, liegt, i.e. eine Teilfläche oder das gesamte andere Merkmal bedeckt.

Im Rahmen der Erfindung ist es möglich, dass eine Substratschicht oder mehrere verschiedene Substratschichten weitere, fachübliche nicht-diffraktive Sicherheitselemente tragen.

Insbesondere im Falle, dass die diffraktiven Sicherheitselement Volumenhologramme sind, wird es sich empfehlen, dass die Substratschichten zumindest in den Bereichen der diffraktiven Sicherheitselemente, bezogen auf eine Belichtungswellenlänge des diffraktiven Sicherheitselementes, transparent sind. In den anderen Bereichen können die Substratschichten, müssen aber nicht, auch transparant sein. Stattdessen können in den anderen Bereichen aber auch nicht-transparente Aufdrucke, Bilder, etc. angebracht sein.

Generell sollten alle Substratschichten jedenfalls in den Bereichen, welche zwischen (in Richtung orthogonal zu einer Hauptfläche der Substratschichten betrachtet) dem holographischen Material und einem Betrachter des Sicherheits- und/oder Wertdokuments bzw. einer Aufnahmeapparatur angeordnet sind, optisch transparent und nicht streuend sein. Dies wird in der Regel alle über einem tiefstliegenden holographischen Material (bezogen auf den fertigen Verbund) angeordnete Substratschichten betreffen. Solche Substratschichten weisen vorteilhafterweise eine Dicke von 10 bis 100 µm, insbesondere 25 bis 85 µm, höchstvorzugsweise 40 bis 60 µm, beispielsweise ca. 50 µm, auf.

Analoges gilt im Rahmen der folgend beschriebenen Herstellungsverfahren in Bezug auf sowohl über als auch unter dem holographischen Material angeordnete Substratschichten und/oder Deckschichten und/oder Release-Schichten.

Das Verfahren nach Anspruch 1 ist für praktisch alle Varianten des erfindungsgemäßen Sicherheits- und/oder Wertdokuments einsetzbar. Handelt es sich bei den durch die holographische Beschichtung erzeugten diffraktiven Sicherheitsmerkmale um statischen und/oder individuelle Informationen, kann danach auf den so erzeugten Verbund eine weitere Substratschicht mit einem holographischen Material, in welchem beispielsweise personalisierte Informationen gespeichert sind, aufgebracht werden.

Insbesondere in der Variante eines Sicherheits- und/oder Wert dokuments , worin die diffraktiven Sicherheitselemente der verschiedenen Substratschichten registergenau lateral aneinander anschließen sollen (in Betrachtung orthogonal zur Hauptfläche des Sicherheits- und/oder Wertdokuments), empfiehlt sich statt dessen ein Verfahren nach Anspruch 2. In dieser Variante ist es dabei erforderlich, dass die verschiedenen Substratschichten in den Bereichen, welche über oder unter den jeweiligen diffraktiven Sicherheitselementen der anderen Substratschichten liegen auch transparent sind, da ansonsten eine Belichtung nicht ohne Weiteres möglich ist. Des weiteren darf die Stufe b), jedenfalls in jenen Bereichen, in welchen in Stufe c) belichtet werden soll, nur in einer Weise erfolgen, welche mit Temperaturen unterhalb, insbesondere zumindest 10°C unterhalb, vorzugsweise zumindest 40°C, der Fixierungstemperatur des holographischen Materials erfolgt, damit die Stufe c) noch ausführbar bleibt. Typischerweise schließt die eine

Verbindung im Wege des Laminierens aus, da dabei Temperaturen von 130°C und höher zur Anwendung kommen. Dies kann beispielsweise durch mechanisches oder thermisches Heften erfolgen. Bevorzugt ist es für die Stufe b), wenn die Verbindung durch Punktschweissung mit einem oder mehreren Schweisspunkten erfolgt, wobei die die Substratschichten miteinander verbindenden Schweisspunkte vorzugsweise außerhalb der Bereiche der in Stufe c) durchzuführenden Belichtungen angeordnet sind. Anschließend an die Stufe d) erfolgt typischerweise die finale Verbindung der Substratschichten miteinander, beispielsweise durch Laminieren. Ansonsten gelten die zur vorstehenden Verfahrensvariante angebrachten Ausführungen analog.

Das Verbinden der Substratschichten miteinander, ggf. unter Zwischenschaltung von Zwischenschichten, kann sowohl im Wege des Laminierens als auch durch Kleben erfolgen. Insbesondere in dem erstgenannten erfindungsgemäßen Verfahren können sich auch verschiedene Arten der Verbindung für verschiedene Substratschichten empfehlen. So können beispielsweise alle Schichten, einschließlich einer Substratschicht mit einem statischen und/oder individualisierten diffraktiven Sicherheitselement (oder mehrerer solcher Substratschichten), nicht jedoch eine Substratschicht mit personalisiertem diffraktiven Sicherheitselement miteinander laminiert werden. Anschließend kann die Substratschicht mit dem personalisierten diffraktiven Sicherheitselement ebenfalls auflaminiert, aber auch aufgeklebt werden. Hierfür kommen alle fachüblichen Kleber, wie Transferkleber, UVvernetzende Kleber, thermisch vernetzende Kleber, etc., in Frage.

optional können die Substratschichten vor oder nach dem Beschickten mit dem holographischen Materials auf der dem holographischen Material gegenüberliegenden Seite mit einer Release-Schicht versehen sein, welche beispielsweise das Aufrollen einer (quasi-endlos hergestellten) Substratschicht oder das Stapeln verschiedener zugeschnittener Substratschichten erlaubt, und welche dann vor dem Verbinden der betreffenden Substratschicht mit anderen Schichten wieder abgezogen wird. Diese Anordnung einer Release Schicht ist gegenüber den bekannten Patches des Standes der Technik neu und insofern weist eine Substratschicht mit auf einer Seite angebrachter Schicht aus holographischem Material und auf der anderen Seite angebrachter Release-Schicht selbstständige erfinderisch Bedeutung auf. Alternativ kann die Release Schicht aber auch auf dem holographischen Material direkt oder mit zumindest einer Zwischenschicht angeordnet sein, i.e. auf der das holographische Material tragenden Seite des Substrats.

Die Beschichtung aus dem holographischen Material kann auf die Substratschicht vollflächig aufgetragen werden, oder nur in jenem Teilbereich, in welchem das diffraktive Sicherheitselement entstehen soll.

Nach dem Verdrucken kann eine beschichtete Substratschicht erwärmt werden, beispielsweise im Wege des Durchlaufes durch eine Heizstrecke, wodurch Lösemittel schneller aus dem frisch verdruckten holographischen Material entfernt werden. Es versteht sich, dass die Temperatur dabei unterhalb, vorzugsweise zumindest 10°C unterhalb, insbesondere zumindest 40°C unterhalb, der thermischen Fixiertemperatur des holographischen Materials liegen sollte.

Das grundsätzliche Vorgehen bei der holographischen Belichtung von holographischen Materialien ist beispielsweise in der Literaturstelle EP 0 896 260 A2 beschrieben. Die Grundzüge werden folgend kurz erläutert. Zunächst wird ein Holographie-Master mit einem Masterhologramm hergestellt. Im einfachsten Fall handelt es sich dabei um eine holographische Mattscheibe oder einen holographischen Spiegel. Der Holographie-Master kann aber auch eine Abbildung, eine kinematische Struktur oder ein Objekthologramm enthalten. Dann wird der Holographie-Master hinter der transparenten Substratschicht mit dem aufgedruckten holographischen Material positioniert, beispielsweise in flächigem Kontakt, ggf. getrennt durch eine Schutzfolie. Kohärentes Licht, beispielsweise aus einem Laser, wird auf die dem Holographie-Master abgewandte Seite der Substratschicht eingestrahlt, typischerweise mit definierter Wellenlänge und definiertem Inzidenzwinkel, nach Maßgabe des vom Holographie-Master zu rekonstruierenden holographischen Musters. Es durchdringt die Substratschicht, auch in den Bereichen mit aufgebrachtem holographischen Material, und wird vom Master gebeugt bzw. reflektiert, wobei sich das Hologramm durch Interferenz mit dem einfallenden Licht rekonstruiert und das Hologramm in den mit dem holographischen Material bedruckten Bereichen abbildet und speichert durch photochemische oder photophysikalische Prozesse im holographischen Material. Dabei kann der Holographie-Master so ausgelegt sein, dass er für mehrere Wellenlängen empfindlich ist und diese entsprechend beugt.

Die Belichtung des holographischen Materials kann grundsätzlich beliebig erfolgen. Wenn eine individualisierende oder personalisierende Abbildung, beispielsweise eine graphische Darstellung oder eine Zeichenfolge, im Rahmen des diffraktiven Sicherheitselements dargestellt werden soll, empfiehlt es sich, dass die Belichtung über einen mit einer Abbildung modulierten Spatial Light Modulator (SLM) erfolgt. Ein Spatial Light Modulator erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micromirror Device) Chip, ein LCD (Liquid Crystal Display) Transmissions-display, oder ein LCOS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Abbildungen, beispielsweise in Form eines Passfotos, oder einer Zeichenfolge, wie Namen, Seriennummer, sonstige Daten, projizieren lassen. Durch die freie Ansteuerbarkeit können auch ohne Weiteres verschiedene Bilder oder Muster in zeitlicher Folge hintereinander generiert werden, wodurch auch der zweite Teilbereich auch individualisiert werden kann.

Eine Fixierung kann beispielsweise im Wege der fachüblichen thermischen und/oder UV-Bestrahlungsinitiierten (Nach-) Vernetzung des holographischen Materials erfolgen.

Während vorstehend und nachfolgend im Wesentlichen die Stufen der Herstellung des Substrates mit Sicherheitselement beschrieben sind, versteht es sich, dass zuvor und danach die üblichen weiteren fachüblichen Schritte der Herstellung eines Sicherheits- und/oder Wertdokuments erfolgen. So kann eine Kernschicht mit einer Bedruckung und ggf. weiteren Sicherheitselementen versehen werden. Dann können verschiedene fachübliche Schichten, typischerweise aus Polymerwerkstoffen, auf beiden Seiten der Kernschicht aufgelegt und in fachüblicher Weise angeordnet werden. Zumindest zwei dieser Schichten sind die erfindungsgemäß ausgebildeten Substratschichten. Dann können die verschiedenen Schichten miteinander verbunden werden, beispielsweise durch Verkleben oder Laminieren. Typischerweise ist beidseitig zu äußerst eine transparente Overlay-Schicht (ggf. in Ausbildung als Lackschicht) angeordnet, welche darunterliegende Schichten vor mechanischer, chemischer oder sonstiger Beschädigung durch Umwelteinflüsse schützt. Anschließend an das Laminieren zumindest eines Teils der Schichten erfolgt typischerweise eine Personalisierung oder Individualisierung des Sicherheits- und/oder Wertdokuments, wobei im Rahmen der Personalisierung noch weitere Schichten, beispielsweise eine Substratschicht mit individualisiertem diffraktivem Sicherheitselement, aufgebracht werden können.

Im Folgenden wird die Erfindung anhand von herstellbaren, lediglich Ausführungsformen darstellenden Beispielen näher erläutert. Es zeigen:
- Figur 1:: eine erste Ausführungsform in Aufsicht (a) und im Querschnitt (b),
- Figur 2:: eine zweite Ausführungsform in Aufsicht (a) und im Querschnitt (b),
- Figur 3:: eine dritte Ausführungsform in Aufsicht (a) und im Querschnitt (b), und
- Figur 4:: eine aschematische Darstellung einer holographischen Belichtung.

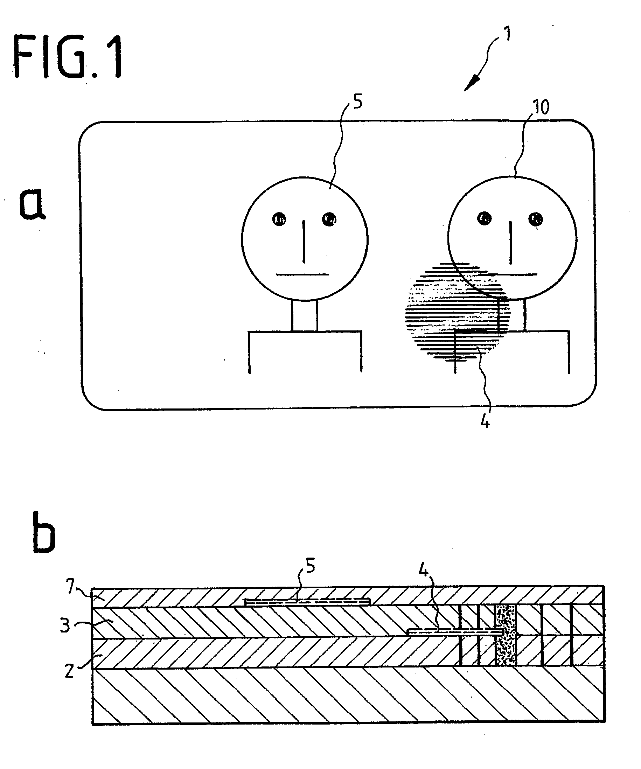

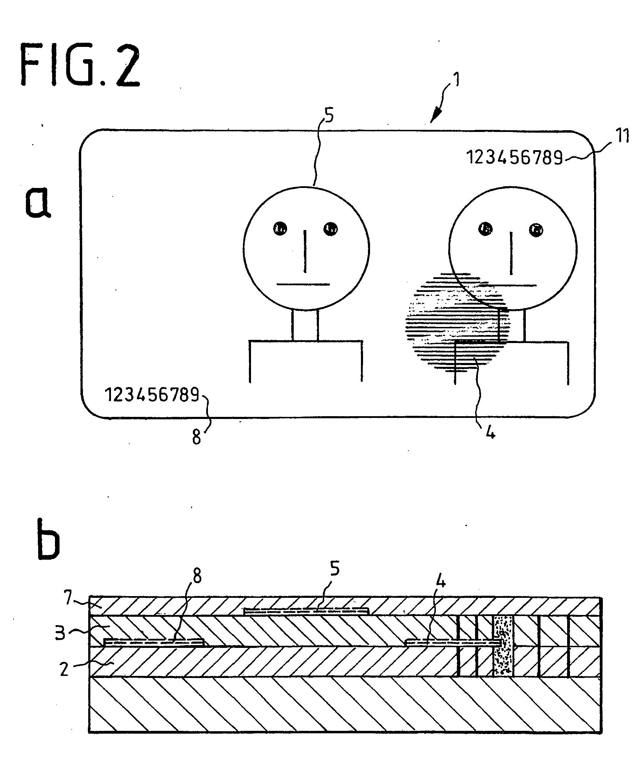

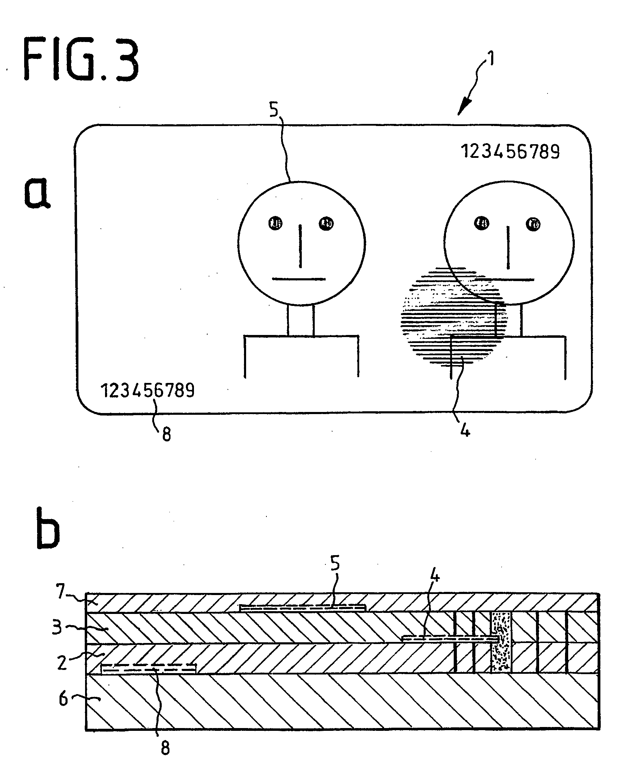

Den Darstellungen der Figur 1 bis 3 ist gemeinsam, dass das Sicherheits- und/oder Wertdokument 1 mit zumindest zwei miteinander verbundenen Substratschichten 2, 3, 6 ausgestattet ist, wobei die Sustratschichten 2, 3, 6 jeweils ein diffraktives Sicherheitselement 4, 5, 8 tragen. Dabei sind in der Figur 1 zwei Substratschichten 2, 3 eingerichtet, welche jeweils ein diffraktives Sicherheitselement 4, 5, tragen. In der Figur 2 sind demgegenüber zwar ebenfalls zwei Substratschichten, 2, 3 vorgesehen, hierbei trägt jedoch eine Substratschicht 3 nur ein diffraktives Sicherheitselement 5, während die Substratschicht 2 zwei verschiedene und lateral voneinander beabstandete diffraktive Sicherheitselemente 4, 8 trägt. In der Figur 3 ist die Einrichtung von drei verschiedenen Substratschichten 2, 3, 6 dargestellt, welche jeweils ein diffraktives Sicherheitselement 4, 5, 8 tragen. Die oberste Substratschicht 3 ist in allen Ausführungsformen mit einer Deckschicht 7 abgedeckt. Die Substratschichten 2, 3, 6 sind unmittelbar gestapelt miteinander verbunden. Lediglich der Einfachheit halber ist nicht dargestellt, dass zwischen den Subtratschichten 2, 3, 6 auch Zwischenschichten vorgesehen sein können.

In den Figuren 1 bis 3 sind die diffraktiven Sicherheitselemente 4, 5, 8 verschiedener Substratschichten 2, 3, 6, in Projektion orthogonal zu einer Hauptfläche des Sicherheits- und/oder Wertdokumentes (1), voneinander beabstandet angeordnet. Stattdessen können Sie einander aber auch überlappen oder (ggf. registergenau) aneinander anschließen.

Man erkennt in den Figuren 1 bis 3 des Weiteren, dass eine Substratschicht 2, 3, 6 oder mehrere verschiedene Substratschichten 2, 3, 6 weitere, nicht-diffraktive Sicherheitselemente 10, 11 tragen können.

In der Figur 1 ist dies ein Passbild, welches durch das diffraktive Sicherheitselement 4 zumindest teilweise überdeckt wird. Das Passbild kann beispielsweise im Wege der Lasergravur hergestellt sein, wozu dann in den entsprechenden Bereichen mindestens einer der Substratschichten 2, 3 hierfür geeignete Pigmente aufgebracht sind. Dabei ist hervorzuheben, dass das nicht-diffraktive Sicherheitselement 10 sich deckungsgleich sowohl in der Substratschicht 2, als auch in der Substratschicht 3 befindet (oder anliegend, wenn nur in einer der Substratschichten 2 oder 3 eingerichtet). Durch Anbringung des diffraktiven Sicherheitselements 4 auf der Substratschicht 2 ist dieses innerhalb des nicht-diffraktiven Sicherheitselements 10 angeordnet (bezogen auf Richtungen orthogonal zur Hauptfläche des Sicherheits-und/oder Wertdokuments 1), was eine besondere Dokumentensicherheit gewährleistet. Das diffraktive Sicherheitselement 5 repliziert im Beispiel in der Darstellung das nicht-diffraktive Sicherheitselement 10.

Die Figur 2 unterschiedet sich von der Figur 1 im Wesentlichen dadurch, dass auf der Substratschicht 2 ein weiteres, gegenüber dem diffraktiven Sicherheitselement 4 lateral beabstandetes diffraktives Sicherheitselement 8 angebracht ist, hier beispielsweise eine Dokumentennummer. Die Dokumentennummer ist ihrerseits an anderer Stelle und lateral beabstandet als weiteres nicht-diffraktives Sicherheitselement 11 repliziert.

Der Gegenstand der Figur 3 unterscheidet sich von jenem der Figur 2 im wesentlichen dadurch, dass die diffraktiven Sicherheitelemente 4, 8 auf verschiedenen Substratschichten 2, 6 eingerichtet sind.

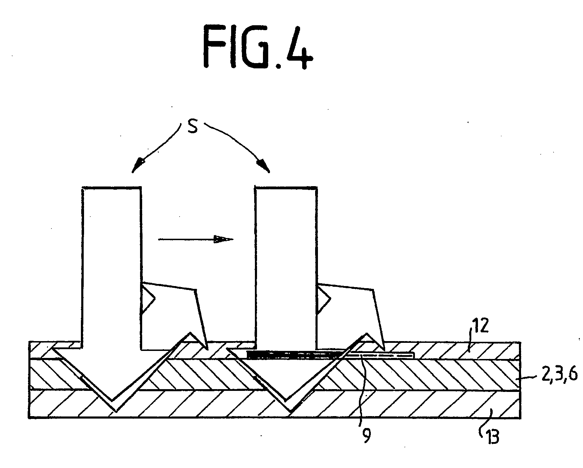

In der Figur 4 ist in schematischer Weise ein holographischer Belichtungsvorgang dargestellt. Man erkennt in starker Vergrößerung, dass in einem Teilbereich der Substratschicht ein holographisches Material aufgedruckt ist. Auf der Oberseite der Substratschicht ist ein Release-Layer 12 angeordnet. Die Substratschicht 2, 3, 6 ist ihrerseits auf einen Holographie-Master 13 aufgelegt. Der Holographie-Master 13 beugt das Licht des mit vorgegebener Wellenlänge einstrahlenden und im Beispiel scannenden Belichtungsstrahls S unter einem definierten Winkel. Ein holographisches Muster bildet sich dabei nur in jenen Bereichen, in welchen der Belichtungsstrahl S und der vom Holographie-Master 13 gebeugte Rückstrahl interferieren und wo sich gleichzeitig holographisches Material 9 befindet. Dies ist in der Figur 4 der vollschwarz gezeichnete Bereich.

## Patentansprüche

1. Verfahren zur Herstellung eines Sicherheits- und/oder Wertdokuments (1) mit zumindest zwei miteinander gestapelt verbundenen Substratschichten (2, 3, 6), wobei die Sustratschichten (2, 3, 6) jeweils ein als Volumenhologramm (4, 5, 8) ausgebildetes diffraktives Sicherheitselement tragen, wobei eine oberste Substratschicht (3) ein personalisiertes diffraktives Sicherheitselement (5) trägt und die oberste Substrat.schicht (3) auf die Substratschichten (2, 6) ohne personalisiertem diffraktivem Sicherheitselement aufgeklebt ist, mit den folgenden Verfahrensschritten:
a) auf die voneinander separaten Substratschichten (2, 3, 6) wird jeweils eine Beschichtung mit einem holographischen Material (9) aufgedruckt, wobei der Druckprozess ausgewählt ist aus Irisdruck, Offsetdruck, Simultandruck, Siebdruck, Tintenstrahldruck, Rastertiefdruck, Stichtiefdruck, Flexodruck, Gravurdruck und Buchdruck,
b) Die Substratschichten (2, 3, 6) werden jeweils holographisch belichtet,
c) das holographische Material (9) der Substratschichten (2, 3, 6) wird jeweils optional fixiert,
d) die Substratschichten (2, 3, 6) werden in definierter lateraler Positionierung zueinander miteinander verbunden.

2. Verfahren zur Herstellung eines Sicherheits- und/oder Wertdokuments (1) mit zumindest zwei miteinander gestapelt verbundenen Substratschichten (2, 3, 6), wobei die Sustratschichten (2, 3, 6) jeweils ein als Volumenhologramm (4, 5, 8) ausgebildetes diffraktive Sicherheitselement tragen, wobei eine oberste Substratschicht (3) ein personalisiertes diffraktives Sicherheitselement (5) trägt und die oberste Substratschicht (3) auf die Substratschichten (2, 6) ohne personalisiertem diffraktivem Sicherheitselement aufgeklebt ist, mit den folgenden Verfahrensschritten:
a) auf die Substratschichten (2, 3, 6) wird jeweils eine Beschichtung mit einem holographischen Material (9) aufgedruckt, wobei der Druckprozess ausgewählt ist aus Irisdruck, Offsetdruck, Simultandruck, Siebdruck, Tintenstrahldruck, Rastertiefdruck, Stichtiefdruck, Flexodruck, Gravurdruck und Buchdruck,
b) die Substratschichten (2, 3, 6) werden in definierter lateraler Positionierung zueinander fixiert,
c) Die Substratschichten (2, 3, 6) werden jeweils holographisch belichtet, gleichzeitig oder nacheinander,
d) das holographische Material (9) der Substratschichten (2, 3, 6) wird jeweils optional fixiert,
e) die Substratschichten (2, 3, 6) werden miteinander verbunden.

3. Verfahren nach Anspruch 1 oder 2, wobei die Substratschichten (2, 3, 6) entweder direkt oder unter Zwischenschaltung zumindest einer Zwischenschicht miteinander verbunden werden.

## Claims

1. A method for producing a security and/or valuable document (1) with at least two interconnected stacked substrate layers (2, 3, 6), wherein the substrate layers (2, 3, 6) each carry a diffractive security element adapted as a volume hologram (4, 5, 8), wherein an uppermost substrate layer (3) carries a personalized diffractive security element (5) and the uppermost substrate layer (3) is glued onto the substrate layers (2, 6) without a personalized diffractive security element, comprising the following steps:
a) on the substrate layers (2, 3, 6) separated from each other is printed one coating each of a holographic material (9), the printing process being selected from rainbow printing, offset printing, simultaneous printing, screen printing, inkjet printing, photogravure, intaglio printing, flexography, gravure and letterpress printing,
b) the substrate layers (2, 3, 6) are each holographically exposed,
c) optionally, the holographic material (9) of the substrate layers (2, 3, 6), respectively, is fixed,
d) the substrate layers (2, 3, 6) are joined together in a defined lateral position with respect to each other.

2. A method for producing a security and/or valuable document (1) with at least two interconnected stacked substrate layers (2, 3, 6), wherein the substrate layers (2, 3, 6) each carry a diffractive security element adapted as a volume hologram (4, 5, 8), wherein an uppermost substrate layer (3) carries a personalized diffractive security element (5) and the uppermost substrate layer (3) is glued onto the substrate layers (2, 6) without a personalized diffractive security element, comprising the following steps:
a) on the substrate layers (2, 3, 6) is printed one coating each of a holographic material (9), the printing process being selected from rainbow printing, offset printing, simultaneous printing, screen printing, inkjet printing, photogravure, intaglio printing, flexography, gravure and letterpress printing,
b) the substrate layers (2, 3, 6) are fixed in a defined lateral position with respect to each other,
c) the substrate layers (2, 3, 6) are each holographically exposed, simultaneously or successively,
d) optionally, the holographic material (9) of the substrate layers (2, 3, 6), respectively, is fixed,
e) the substrate layers (2, 3, 6) are joined together.

3. The method of claim 1 or 2, wherein the substrate layers (2, 3, 6) are joined together either directly or with the interposition of at least one intermediate layer.

## Revendications

1. Procédé de fabrication d'un document de sécurité et/ou de valeur (1) avec au moins deux couches de substrat (2, 3, 6) empilées et liées ensemble, dans lequel les couches de substrat (2, 3, 6) portent chacune un élément de sécurité diffractif agencé comme hologramme de volume (4, 5, 8), dans lequel une couche de substrat (3) supérieure porte un élément de sécurité diffractif (5) personnalisé et la couche de substrat (3) supérieure est collée sur les couches de substrat (2, 6) sans l'élément de sécurité diffractif (5) personnalisé, comprenant les étapes suivantes:
a) sur les couches de substrat (2, 3, 6) séparées les unes des autres est imprimé un revêtement chacun d'un matériau holographique (9), le procédé d'impression étant choisi à partir d'impression irisée, impression offset, impression simultanée, sérigraphie, impression à jet d'encre, impression en timbre-relief, impression hélio, impression flexographique, impression de gravure et typographie,
b) les couches de substrat (2, 3, 6) sont exposées chacune par holographie,
c) optionnellement, le matériau holographique (9) des couches de substrat (2, 3, 6), respectivement, est fixé,
d) les couches de substrat (2, 3, 6) sont liées ensemble dans des positions latérales définies les unes par rapport aux autres.

2. Procédé de fabrication d'un document de sécurité et/ou de valeur (1) avec au moins deux couches de substrat (2, 3, 6) empilées et liées ensemble, dans lequel les couches de substrat (2, 3, 6) portent chacune un élément de sécurité diffractif agencé comme hologramme de volume (4, 5, 8), dans lequel une couche de substrat (3) supérieure porte un élément de sécurité diffractif (5) personnalisé et la couche de substrat (3) supérieure est collée sur les couches de substrat (2, 6) sans l'élément de sécurité diffractif (5) personnalisé, comprenant les étapes suivantes:
a) sur les couches de substrat (2, 3, 6) est imprimé un revêtement chacun d'un matériau holographique (9), le procédé d'impression étant choisi à partir d'impression irisée, impression offset, impression simultanée, sérigraphie, impression à jet d'encre, impression en timbre-relief, impression hélio, impression flexographique, impression de gravure et typographie,
b) les couches de substrat (2, 3, 6) sont fixées dans des positions latérales définies les unes par rapport aux autres.
c) les couches de substrat (2, 3, 6) sont exposées chacune par holographie, simultanément ou successivement,
d) optionnellement, le matériau holographique (9) des couches de substrat (2, 3, 6), respectivement, est fixé,
e) les couches de substrat (2, 3, 6) sont liées ensemble.

3. Procédé selon la revendication 1 ou 2, dans lequel les couches de substrat (2, 3, 6) sont liées ensemble directement ou bien en intercalant au moins une couche intermédiaire.
